# EUROPEAN PATENT APPLICATION

(11) **EP 1 992 475 A2**
(43) Date of publication of application: **19.11.2008**
(21) Application number: 08155971.8
(22) Date of filing: 09.05.2008
(51) Int. Cl.: B30B 7/02

(54) **Multiple-plate press**

(30) Priority: 11.05.2007 IT MO20070159
(71) Applicant: SCM Group S.p.A., 47900 Rimini (IT)
(72) Inventor: Oliva, Stefano, 61024 Mombaroccio (PU) (IT)
(74) Representative: Crugnola, Pietro

(57) **Abstract**

A press provided with a plurality of superimposed work plates (2) that bound gaps (3) for receiving respective elements (100) to be pressed, comprises actuating means (10, 11, 12) acting on said plates (2) and controlled by valve means (20, 21, 22), sensor means (13, 14) for detecting at least operating positions of said actuating means (10, 11, 12) and/or of said work plates (2), a command unit (7) connected by communicating means (6) to said valve means (20, 21, 22) and to said sensor means (13, 14) to command the operation of said actuating means (10, 11, 12), characterised in that said communicating means (6) has a fieldbus architecture.

## Description

The present invention relates to an operating machine for pressing flat elements, in particular a rapid press with multiple plates arranged for pressing flat elements to be glued to obtain, for example, honeycomb panels made of wood or similar material.

Rapid presses are known that are provided with a plurality of work plates driven by compression means so as to press at the same time a plurality of elements to be glued, each of which is inserted into a respective gap comprised between a work plate and the adjacent one.

The work plates are mounted slidably on a supporting structure of the machine, at the top of which a series of hydraulic linear actuators of compression means is fixed.

Opening means fixed to the supporting structure is provided to separate and space selectively apart two adjacent work plates, in order to extract from the respective space the corresponding element inserted therein, at the same time maintaining the remaining elements pressed.

For this purpose, the aforesaid presses comprise linear movement means that enables all the work plates to be moved vertically along the supporting structure in order to position two work plates at the opening means to be spaced apart to extract the desired element.

Level or position sensors enable the correct arrangement of the work plates to be detected with respect to the opening means. The latter comprises grippers, driven by respective hydraulic actuators, and arranged for abutting on peripheral edges of the work plates to be spaced apart.

Similarly, the movement means of the work plates comprises a plurality of hydraulic linear actuators fixed to the top of the supporting structure.

The hydraulic actuators of the compression means, of the movement means and of the opening means are controlled by distributing valves inserted into the hydraulic supply/discharge circuit.

A drawback of these presses consists of the fact that the hydraulic circuit does not enable the movement of the hydraulic actuators to be controlled in a precise and repeatable manner. As a result, the movement means sometimes positions the work plates incorrectly with respect to the opening means, thus preventing the extraction of the element. Similarly, the movement means may move the plates irregularly, arranging the plates so that they are not parallel to a horizontal reference plane, causing the plates to become deformed and/or to break.

Patent application EP 1502728 by the same applicant discloses a rapid press that resolves the aforesaid problems as it comprises a hydraulic supply circuit supplying the movement means provided with a plurality of proportional solenoid valves, each of which is suitable for controlling a respective hydraulic linear actuator of said movement means. In particular, each solenoid valve adjusts the flow of pressurised fluid entering and/or exiting the actuator, so as to vary the movement speed of the corresponding piston. A linear sensor, for example an encoder, is associated with each hydraulic actuator to detect the operating position thereof.

A command unit of the press, typically an industrial computer or PLC (Programmable Logic Controller), commands by closed-loop feedback the position and the speed of the linear actuators, at each operating instant of the press. This ensures correct positioning of the work plates with respect to the opening means and an immediate arrest of the press if the positions of the hydraulic actuators of the movement means differ by a value that is greater than a permitted limit.

Communication controlling means is provided in the PLC to manage and process the digital and/or analogue signals coming from the sensors and the analogue signals directed to the actuators (solenoid valves). Said controlling means comprises a software program run by the PLC. The latter is physically linked to the operating components of the press, i.e. proportional valves, linear sensors, work plate level-sensors, etc, by suitable cabling.

A drawback of these known systems consists of the fact that the communication controlling means, i.e. the communication controlling program or software, is specifically developed and set up for the PLC by which it is run. Using on the same machine different types of PLC that are commercially available and usable according to specific needs of users thus requires respective different communication controlling programs to be developed, this significantly increasing the cost and time required to develop and start production of the press.

Another drawback consists of the fact that this press has a centralised architecture communication system with point-to-point connections between the command unit and each of the operating components, for example with analogue signals (standard 0-10 Volt). This makes it necessary to have a very great number of cables, with very laborious and costly cable-laying and cable-protection work that requires time and specialised labour. For example, in the case of a rapid press provided with a plurality of solenoid valves, linear sensors and level sensors, hundreds of metres of cable are necessary for connecting the aforesaid components with the PLC.

In addition to this, such a communication system is not particularly flexible and adding and/or removing operating components requires a considerable amount of work and time, both for laying and arranging the corresponding cabling and for modifications and supplements to be made to the communication controlling means in the command unit.

An object of the present invention is to improve known multiple-plate presses, in particular by increasing the flexibility and capacity of communicating means of the signals.

Another object is to obtain a rapid press that enables the transmission of the signals and/or data between the command unit of the press and operating components to be considerably simplified, so as to achieve a faster and cheaper installation.

A further object is to provide a press having communicating means for communicating the signals and/or data that is flexible and adaptable, i.e. configurable and/or modifiable in a simple, rapid and efficient manner to cope with the various operational needs.

Still another object is to provide a press provided with communicating means for communicating data and/or signals that enables completely digital and high-speed transmission and operates in an efficient manner even in environments that are very disturbed by electromagnetic waves.

According to the invention, there is provided a press provided with a plurality of superimposed work plates that bound gaps for receiving respective elements to be pressed, comprising actuating means acting on said work plates and controlled by valve means, sensor means for detecting at least operating positions of said actuating means and/or of said work plates, a command unit connected by communicating means to said valve means and to said sensor means to command the operation of said actuating means, characterised in that said communicating means has a fieldbus architecture.

Owing to the invention it is thus possible to make a press provided with communicating means with fieldbus architecture and comprising a Bus communication network, in particular a CAN Bus network operating with a CANopen protocol, which enables the connections between the operating components of the press - valve means and sensor means to be simplified significantly and, above all, between the latter and the command unit of the press. For the transmission of data a fieldbus network in fact requires a CAN Bus line consisting of a sole twisted pair through which the signals and/or data pass. This enables the cost of cabling and the time required for laying and implementing the network to be reduced considerably. Further, the fieldbus architecture, and in particular CAN Bus architecture, is extremely flexible because it enables operating components to be added or removed without the need to run substantial modifications at the hardware or software level in the CAN Bus network.

The communicating means includes a communication controlling means associated with the command unit and arranged for managing and controlling input and/or output data and/or signals between said command unit and the operating components. The communication controlling means comprises a CAN Bus interface module, of known type, which can be coupled with different types of command unit (PLC) without the need to run substantial hardware and/or software modifications on the PLC. The CAN Bus interface module is further a commercially available component and is selectable according to specific needs requirements, which are in each case completely compatible with the CAN Bus network.

CAN Bus interfaces are associated with the operating components to enable the latter to transmit and/or receive data and/or signals with the CAN Bus network. Such CAN Bus interfaces, in addition to being already set up to exchange data and signals with the CAN Bus interface module of the controlling means, are able to converse together, so as to enable the individual components to perform automatically diagnosis, control and maintenance functions.

The invention can be better comprised and implemented with reference to the attached drawings, which illustrate an embodiment thereof by way of non-limiting example, in which:
Figure 1 is a schematic front view of the multiple-plate press of the invention, showing communicating means for connecting a command unit of the press to valve means and sensor means;
Figure 2 is a function diagram of the communicating means in Figure 1;
Figure 3 is a function diagram of an embodiment of the communicating means in Figure 2.

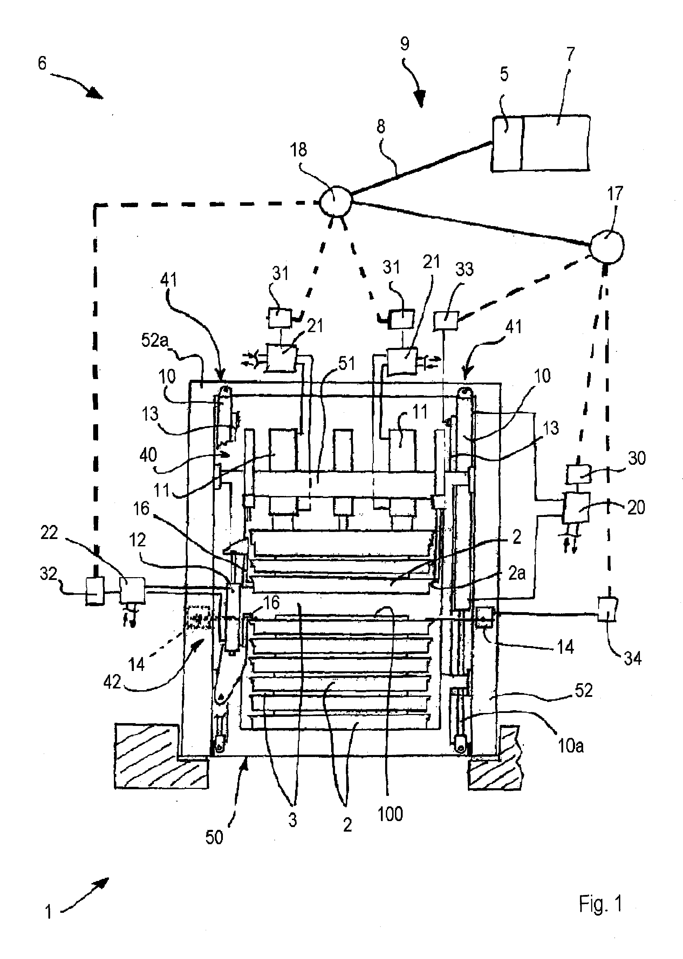

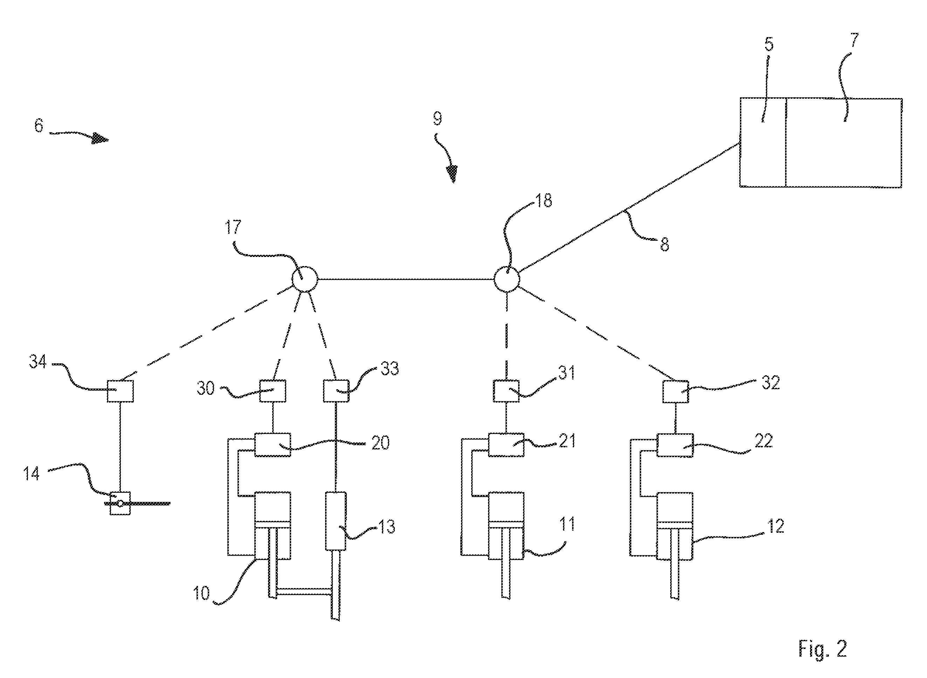

With reference to Figures 1 and 2, there is illustrated a press 1, of known type, provided with a plurality of superimposed work plates 2 that bound respective gaps 3 that are suitable for housing corresponding elements 100 to be pressed, such as, for example, blanks, rolled sections, plywood, or veneers to be glued to internal filling layers and spacing to form honeycombed panels made of wood or similar material.

The press 1 is provided with compression means 40 acting on said plates 2 to press the elements 100, movement means 41 for selectively positioning a pair of work plates 2 at opening means 42 suitable for spacing apart said plates 2 to enable the respective gap 3 to be accessed and a glued and pressed element 100 to be extracted or an element to be glued and pressed to be inserted.

The movement means 41 comprises first actuating means 10, that includes a plurality of first linear actuators, typically single-effect hydraulic cylinders, for example four in number, fixed to an upper portion 52a of a supporting structure 52 of the press 1 and acting on a slidable frame 50, that supports the work plates 2 and is vertically movable along said supporting structure 52.

First sensor means 13 is associated with the first actuating means 10. The first sensor means 13 comprises linear position transducers, for example absolute linear encoders, each of which is mounted on a respective first actuator 10 to measure the position and the speed of the respective piston 10a.

The compression means 40 comprises second actuating means 11 that includes a plurality of second linear actuators, which are typically dual-effect hydraulic cylinders, fixed to upper crosspiece means 51 of the slidable frame 50.

The opening means 42 includes third linear actuating means 12, which are typically dual-effect hydraulic cylinders that drive respective grippers 16 that are suitable for abutting on peripheral edges 2a of two adjacent work plates 2 so as to separate and space mutually apart the latter and enable access to the corresponding gap 3.

Second sensor means 14 is provided for detecting the correct positioning of the work plates 2 at the opening means 42. In particular, said second sensor means 14 comprises four level sensors fixed to four opposite sides of the supporting structure 52 so as to detect the height position of the lower work plate intended for being locked by the grippers 16.

The first linear actuators 10 are controlled by first valve means 20 that makes the chambers of each cylinder 10 communicate selectively with a delivery or a discharge of a hydraulic circuit of the press 1, of known type and not illustrated in the figures. The first valve means 20 includes a plurality of proportional hydraulic solenoid valves, each of which is associated with a respective first actuator 10 and is configured for adjusting and controlling the flow of pressurised fluid directed to the latter, so as to adjust precisely the position and speed of the corresponding piston 10a.

The second linear actuating means 11 and the third linear actuators 12 are controlled respectively by second valve means 21 and by third valve means 22 that make the chambers of each cylinder 11, 12 communicate selectively with a delivery or a discharge of the hydraulic circuit. The second valve means 21 and the third valve means 22 comprise, for example, one or more respective hydraulic distribution solenoid valves.

The press 1 comprises a command unit 7, for example an industrial computer or PLC, that manages and controls the operation of the press, i.e. of the compression means 40, movement means 41 and opening means 42.

Communicating means 6 is provided for connecting the command unit 7 to the valve means 20, 21, 22 and to the sensor means 13, 14. In this way, the command unit 7 sends output signals for controlling the valve means 20, 21, 22, that drives the respective linear actuators 10, 11, 12, and receives from the sensor means 13, 14 input signals relating to the operation of the press.

The communicating means 6 has a fieldbus architecture, i.e. comprises a Bus digital technology communication network 9.

This Bus communication network 9 has a CAN (Controller Area Network) serial communication protocol and in particular a CANopen network protocol.

The communicating means 6 comprises communication controlling means 5 associated with said command unit 7 and arranged for managing and controlling input and output signals between said command unit 7 and said valve means 20, 21, 22 and/or said sensor means 13, 14, through the Bus communication network 9.

The communication controlling means 5 comprises a CAN Bus interface module, or BUS master controller, associated with the command unit 7.

The communicating means 6 comprises interface signal means 30, 31, 32, 33, 34 associated with the valve means 20, 21, 22 and with sensor means 13, 14 and arranged for connecting and interfacing the latter with the Bus communication network 9.

The interface means 30, 31, 32, 33, 34 comprises a plurality of respective digital input/output interfaces, of known type, that enable the valve means 20, 21, 22 and the sensor means 13, 14 to transmit and send signals and/or digital data through the Bus communication network 9. For example, in the case of the first valve means 20, which comprises four piloted proportional solenoid valves 20, corresponding first signal interfaces 30 enable the analogue control signals that are necessary for the operation of said valves to be converted into digital signals transmitted in the Bus communication network 9.

Similarly, second signal interfaces 31 and third signal interfaces 32 enable the digital signals that are received by the communication controlling means 5, through the Bus communication network 9, to be received and converted into command signals respectively of the second valve means 21 and of the third valve means 22.

Fourth signal interfaces 33 and fifth signal interfaces 34 respectively enable the first sensors 13 and the second sensors 14 to convert and send to the communication controlling means 5 corresponding digital signals.

The Bus communication network 9 of the communicating means 6 comprises one or more CAN Bus nodes 17, 18 to which are connected the interface signal means 30, 31, 32, 33, 34.

The first interface signal means 30 of the first valve means 20, the fourth interface signal means 33 of the first sensor means 13 and the fifth interface signal means 34 of the second sensor means 14 are connected to a first CAN Bus node 17.

The second interface signal means 31 of the second valve means 21 and the third interface signal means 32 of the third valve means 22 are connected to a second CAN Bus node 18.

The CAN Bus nodes architecture enables the network to be managed more flexibly and efficiently, and, in the case of faults or localised interruptions to the transmission of the signal, enables the network itself to continue to function correctly.

The CAN Bus line 8 that connects together the CAN Bus nodes 17, 18 and the communication controlling means 5 comprises a possibly shielded two-way channel on a twisted pair.

Each CAN Bus node comprises a transceiver, a Bus controller and possibly a microcontroller.

The first CAN Bus node 17 is a CAN controlling node provided with a microcontroller suitable for managing the operations that the operating components connected thereto have to perform. The first CAN Bus node 17 is able to control and manage the exchange of signals between the first valve means 20 and the sensor means 13, 14.

The first CAN Bus node 17 can therefore drive the first linear actuators 10 and, by the linear encoders 13, control through feedback the position and the speed of each of said first actuators 10, so as to maintain the work plates 2 substantially parallel to one another and to a horizontal reference plane during operation of the press 1.

At the same time, the first CAN Bus node 17, by means of the level sensors 14, can control the first actuators 10 so as to perform correct and precise positioning of a pair of adjacent work plates 2, at the opening means 42.

The first CAN Bus node 17 is thus able to manage automatically, by a feedback control, the drive of the movement means 41, performing the task that is performed by the command unit 7 in known presses.

The second CAN Bus node 18 is a CAN signals input/output node that is able to distribute input and/or output signals from said command unit 7 to said second valve means 21 and third valve means 22.

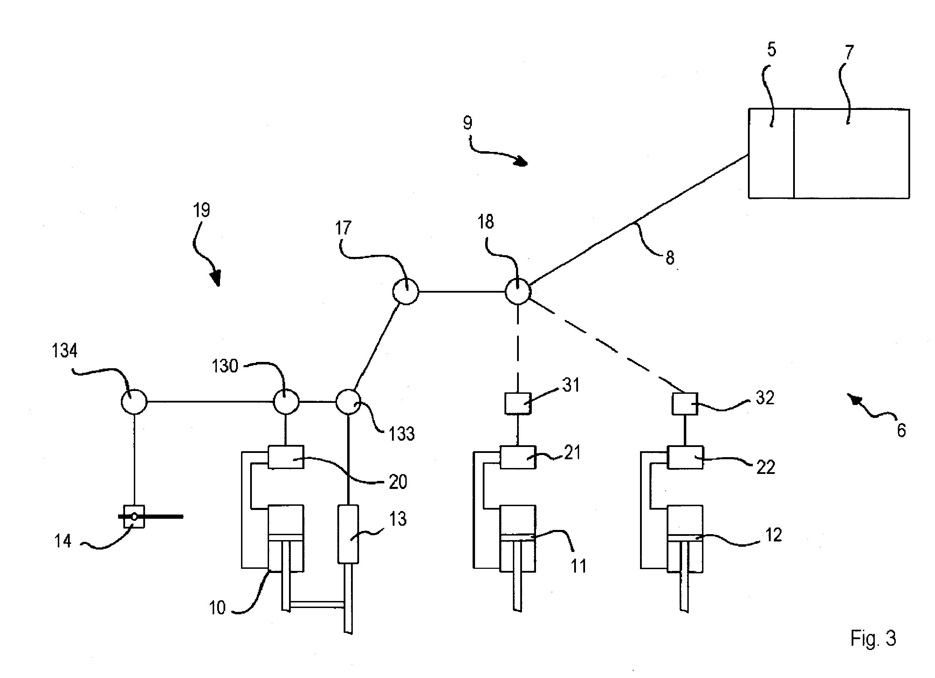

With reference to Figure 3, there is illustrated a version of the communicating means 6 in which CAN Bus interface means 130, 133, 134 is associated with the first valve means 20 and with the sensor means 13, 14, instead of the interface signal means 30, 33, 34.

The CAN Bus interface means 130, 133, 134 comprises respective CAN Bus interfaces that enables the input/output signals of the first valve means 20 and of the sensor means 13, 14 to be managed and controlled and constitutes further CAN Bus nodes of the Bus communication network 9, connected together and to the first CAN Bus node 17 according to the diagram in Figure 3.

The CAN Bus interface means 130, 133, 134 forms a CAN serial communication subnetwork 19 of said CAN serial communication network 9, the communication subnetwork 19 of which is entirely managed and controlled by the first CAN Bus node 17. In a further embodiment of the communicating means 6 that is not illustrated in the Figures, in the CAN serial communication network 9 the functions of the first CAN Bus node 17 are replaced by at least one of the CAN Bus interfaces 130, 133, 134 provided with a corresponding microcontroller for acting as a CAN Bus controlling node.

It is appropriate to note that the communicating means 6 of the CAN Bus type enables the connections between operating components of the press - valve means and sensor means - and the command unit 7 to be significantly simplified, as only one CAN Bus line 8, consisting of a twisted pair, is necessary for the aforesaid connection. In addition to that, the CAN Bus nodes 17, 18 are provided on a machine to reduce further the length of the cables. This enables the cost and time required for setting up and implementing the communication network to be reduced significantly.

Further, as known, the CAN Bus architecture is extremely flexible because it enables operating components to be added or removed without the need to make substantial modifications to the hardware or software level.

The communication controlling means 5, i.e. the CAN Bus interface module of known type, can be coupled with different types of PLC without substantial modifications to the hardware and/or software on the PLC having to be carried out. Further, the CAN Bus interfaces that can be associated with the operating components, in addition to being already arranged for exchanging data and signals with the communication controlling means 5, are able to converse together, so as to enable the single components to run diagnostics and control functions autonomously.

Lastly, the communicating means 6 with CAN Bus architecture functions efficiently and reliably even in environments that are very disturbed by electromagnetic waves.

## Claims

1. Press provided with a plurality of superimposed work plates (2) that bound gaps (3) for receiving respective elements (100) to be pressed, comprising actuating means (10, 11, 12) acting on said plates (2) and controlled by valve means (20, 21, 22), sensor means (13, 14) for detecting at least operating positions of said actuating means (10, 11, 12) and/or of said work plates (2), a command unit (7) connected by communicating means (6) to said valve means (20, 21, 22) and to said sensor means (13, 14) to command the operation of said actuating means (10, 11, 12), **characterised in that** said communicating means (6) has a fieldbus architecture.

2. Press according to claim 1, wherein said fieldbus communicating means (6) comprises a CAN serial communication network (9).

3. Press according to claim 2, wherein said communicating means (6) has a CANopen network protocol.

4. Press according to any preceding claim, wherein said communicating means (6) comprises communication controlling means (5) associated with said command unit (7) and arranged for managing and controlling input and/or output signals between said command unit (7) and said valve means (20, 21, 22) and/or said sensor means (13, 14).

5. Press according to claim 4, as appended to claim 2 or 3, wherein said communication controlling means (5) comprises a fieldbus CAN interface module.

6. Press according to any preceding claim, wherein said command unit (7) comprises a PLC industrial computer.

7. Press according to claim 5, comprising interface means (30, 31, 32, 33, 34; 130, 133, 134) associated with said valve means (20, 21, 22) and with said sensor means (13, 14) for connecting the latter to said CAN serial communication network (9).

8. Press according to claim 7, wherein said interface means comprises signal interface means (30, 31, 32, 33, 34) arranged for enabling said valve means (20, 21, 22) and or said sensor means (13, 14) to exchange signals with said CAN serial communication network (9).

9. Press according to claim 7 or 8, wherein said interface means comprises CAN Bus interface means (130, 133, 134).

10. Press according to any preceding claim, comprising compression means (40) acting on said work plates (2) for pressing elements (100) interposed therebetween, movement means (41) for selectively positioning a pair of work plates (2) at opening means (42), said opening means (42) being arranged for spacing apart said work plates (2) and enabling a respective space (3) to be accessed so as to extract or insert an element (100).

11. Press according to claim 10, wherein said movement means (41) comprises first actuating means (10) commanded by first valve means (20).

12. Press according to claim 10 or 11, wherein said compression means (40) comprises second actuating means (11) commanded by second valve means (21).

13. Press according to any one of claims from 10 to 12 wherein said opening means (42) comprises third actuating means (12) commanded by third valve means (22).

14. Press according to any one of claims from 10 to 13, wherein said sensor means comprises first sensor means (13) for detecting at least a movement of said first actuating means (10) and second sensor means (14) for detecting a defined opening position of a pair of work plates (2) to be spaced apart at said opening means (42).

15. Press according to any one of claims from 7 to 14, as claim 10 is appended to any one of claims 7 to 9, wherein said communicating means (6) comprises CAN node means (17, 18) interposed between said communication controlling means (5) and said interface means (30, 31, 32, 33, 34; 130, 133, 134).

16. Press according to claim 15, as appended to claim 11, wherein said CAN node means (17, 18) comprises a first CAN node (17) to which there is connected respective interface means (30, 33, 34; 130, 133, 134) of said first valve means (20) and of said sensor means (13, 14).

17. Press according to claims 12, 13 and 15, wherein said CAN node means (17, 18) comprises a second CAN Bus node (18) to which there is connected respective interface means (31, 32) of said second valve means (21) and third valve means (22).

18. Press according to claim 16, wherein said first CAN Bus node (17) comprises a CAN controlling node suitable for managing and controlling input and/or output signals between said first valve means (20) and said sensor means (13, 14).

19. Press according to claims 9 and 18, wherein said first CAN Bus node (17) and said CAN Bus interface means (130, 133, 134) of said first valve means (20) and of said sensor means (13, 14) form a CAN serial communication subnetwork (19) of said CAN serial communication network (9).

20. Press according to claim 18 or 19, wherein said first CAN Bus node (17) is arranged for controlled by feedback said first actuating means (10), commanding said first valve means (20) on the basis of signals sent by said sensor means (13, 14).

21. Press according to claim 17, wherein said second CAN Bus node (18) comprises an input/output signals CAN node suitable for exchanging signals between said command unit (7) and respective interface means (31, 32) of the second valve means (21) and third valve means (22).
